# NEUE EUROPÄISCHE PATENTSCHRIFT

(11) **EP 1 433 511 B2**
(45) Veröffentlichungstag und Bekanntmachung des Hinweises auf die Entscheidung über den Einspruch: **05.03.2014**
(45) Hinweis auf die Patenterteilung: 04.04.2007
(21) Anmeldenummer: 02406119.4
(22) Anmeldetag: 19.12.2002
(51) Int. Cl.: B01D 33/21

(54) **Filtereinrichtung**
Filter device
Dispositif de filtration

(43) Veröffentlichungstag der Anmeldung: 30.06.2004
(73) Patentinhaber: UTISOL Technologies AG, 6304 Zug (CH)
(72) Erfinder:
(74) Vertreter: Müller, Markus Andreas

(56) Entgegenhaltungen:
- EP-A- 0 510 328
- EP-A- 0 662 341
- EP-A- 1 149 619
- WO-A-01/00307
- WO-A-94/00217
- FR-A- 2 799 391

## Beschreibung

Die Erfindung betrifft eine Filtereinrichtung, die zum Abtrennen von ungelösten Stoffen aus Flüssigkeiten dient, und insbesondere in der Abwasserreinigung und Wasseraufbereitung eingesetzt wird. Speziell in der biologischen Abwasseraufbereitung wird mit diesen Filtereinrichtungen der Belebtschlamm vom aufbereiteten Abwasser abgetrennt.

Bekannte Filtereinrichtungen besitzen voneinander beabstandete Filterelemente, die zu Filtermodulen zusammengefasst und in Kreis- oder Polygonbauform in einem die Filterflüssigkeit enthaltenen Behälter drehbar angeordnet sind. Als Filterelemente dienen entweder Filterscheiben, die beiderseits mit Filtern bestückt sind oder poröse Hohlfasern. Das Filtrat wird an der Peripherie der Filterelemente über Leitungen abgesaugt. Mit fortschreitender Filterzeit sammeln sich an den Filterflächen die aus der Filterflüssigkeit zurückgehaltenen festen Bestandteile an und beeinträchtigen so den Filtervorgang, so dass sich der Wirkungsgrad der Filtereinrichtung verschlechtert.

Aus DE 195 37 578 ist bekannt, zur Beseitigung der filtrationshemmenden Ablagerungen an den Filtern eine Rückspüleinrichtung vorzusehen, die aus einer Mehrzahl von Absaugbalken besteht, die an den Filtern beidseits der Filterscheibe anliegen und sich radial von aussen nach innen erstrecken. Die einzelnen Absaugbalken sind an Fallrohren angeschlossen, und über weitere Rohrleitungssysteme mit einer Saugpumpe verbunden. Durch Öffnen von eingebauten Schiebern in den Fallrohren wird geklärte Flüssigkeit aus dem Innenraum der Filterscheiben in die Absaugbalken gedrückt, um so die Filterflächen von den anhaftenden Feststoffschichten zu befreien. Bei unzureichender Reinigung kann die Rückspülung über die angeschlossene Saugpumpe noch verstärkt werden. Bei diesen Abreinigungsprozess verursachen die Absaugbalken einem mechanischen Verschleiss an den Filtern und beeinträchtigen so ihre Lebensdauer. Zusätzlich zur Rückspüleinrichtung ist noch eine Einrichtung zur Intensivreinigung der Filter vorgesehen. Sie besteht aus einem Satz vertikal bis zur Hohlwelle erstreckter Spritzrohre, deren Sprühdüsen von einer Hochdruckpumpe mit bereits geklärter Flüssigkeit beschickt werden. Dabei ist vom Nachteil, dass die zum Abreinigen der Filter benutzte geklärte Flüssigkeit durch Anreicherung mit Feststoffen in den Behälter wieder zurückfliesst und den Filterprozess erneut unterworfen wird, was zur Verringerung die Filterleistung führt. Der mechanische und steuerungstechnische Aufwand der Rückspül- und Intensivreinigungseinrichtung ist nicht unbeträchtlich. Die diskontinuierliche Abreinigung hat zur Folge, dass sich während des Filterprozesses zwischen den Reinigungsphasen immer wieder neue Deckschichten aus zurückgehaltenen Feststoffen an den Filtern ausbilden, die den Wirkungsgrad des Filterprozesses negativ beeinflussen.

Weiterhin ist aus EP-A- 0.289.674 eine Filtereinrichtung bekannt, die nach dem Zentriefugenprinzip arbeitet. Dazu ist in einem geschlossenen Behälter eine Hohlwelle vertikal drehbar angeordnet, auf der beabstandet nebeneinander Filterelemente befestigt sind. Die Hohlwelle weist unterhalb des Behälters ein Einlassventil für die Zuführung der Filterflüssigkeit und oberhalb des Behälters ein Einlassventil für die Zuführung eines Rückspülmittels auf. Zunächst wird bei geschlossenem Einlassventil für die Rückspülung Filterflüssigkeit über das untere Einlassventil in die Hohlwelle eingeleitet. Durch die während der Rotation entstehende Zentrifugalkraft tritt die Filterflüssigkeit durch die Löcher der Hohlwelle hindurch und gelangt zwischen die benachbarten Filterelemente. Die Zentrifugalkraft bewirkt einen Aussendruck auf die Filterscheiben, so dass das Filtrat in den Innenraum der Filterscheiben eindringt und mittels Rohrleitungen an der Peripherie der Scheiben abgeleitet und in einer Wanne oberhalb der geschlossenen Behälters aufgefangen wird, von wo es abfliessen kann. Während des Filtervorgangs bilden sich auch hier an den Filterflächen filtrationshemmende Deckschichten aus, die mit fortschreitender Filterzeit den Filterprozess hemmen. Deshalb ist regelmässig eine Rückspülung notwendig. Die Zuführung von Filterflüssigkeit wird für die Zeit der Rückspülung unterbrochen und über das Einlassventil für die Rückspülung ein Rückspülmedium unter hohem Druck in die Hohlwelle eingeleitet, das entweder aus klarem Filtrat, Luft oder Gas besteht und über die Löcher in der Hohlwelle zwischen die benachbarten Filterscheiben ausströmt und so die filtrationshemmenden Deckschichten an den Filterflächen beseitigt. Die Rückspülung ist mit einem verhältnismässig hohen technischen Aufwand verbunden. Ausserdem verschlechtert sich der Wirkungsgrad des Filterprozesses.

Nach EP 1 149619 ist eine Filtereinrichtung bekannt, die zum Klären von verschmutzten Flüssigkeiten, insbesondere von Abwasser dient und drehbar in einem Behälter mit Filterflüssigkeit eintaucht. Sie besteht aus mehreren voneinander beabstandeten, scheibenförmigen Filterelementen, die zu kreis- oder polygonförmigen Filtermodulen zusammengefasst sind und mittig einen Hohlraum bilden, der auf der einen Seite zum Behälter hin verschlossen und auf der anderen Seite über eine Ansaugöffnung mit dem Behälter verbunden ist, wobei der Hohlraum mit einem Strömungsglied derart in Wirkverbindung gebracht ist, dass über die Ansaugöffnung in der Filterflüssigkeit eine Strömung zwischen den beabstandeten Filterelementen erzeugt wird, die ein Anhaften der aus der Filterflüssigkeit ausgefilterten Feststoffe an den Filtern verhindert. Als Strömungsglieder dienen Schaufelräder, die entweder direkt mit den Antrieb der Drehbewegung der Filtereinrichtung gekoppelt sind oder separat angetrieben werden. Bei gekoppeltem Antrieb sind hohe Drehzahlen der Filtereinrichtung erforderlich, was zu vorzeitigem Materialverschleiss führen kann. Der Herstellungsaufwand sowie der Energieverbrauch sind noch relativ hoch.

WO 01/00307, EP 0 662 341 und WO 94/00217 zeigen parallel angeordnete und durch Luftblasen abgereingte Filterplatten.

FR 2 799 391 nimmt auf eine Anordnung mit parallelen und durch Luftblasen abgereingte Filterplatten Bezug, bei welcher zur Verbesserung der Reinigungswirkung die Filterplatten schräggestellt sind. Da bei einer schrägen stationären Platte nur die Unterseite der Platte gereinigt wird, werden gemäss der FR 2 799 391 die schrägen Platten um eine horizontale Achse gedreht.

Der Erfindung liegt die Aufgabe zugrunde, unter Vermeidung der Nachteile des Standes der Technik eine Filtervorrichtung zum Abtrennen von ungelösten Stoffen aus Flüssigkeiten zu schaffen, die eine selbsttätige, verschleissfreie Reinigung der Filterflächen von Filterelementen ermöglicht.

Erfindungsgemäss wird die Aufgabe dadurch gelöst, dass die Filtereinrichtung mit mehreren Filterelementen mit senkrecht angeordneten und um eine horizontale Achse drehbaren Filterscheiben zum Abtrennen von ungelösten Stoffen aus Flüssigkeiten, insbesondere in der Abwasserreinigung und Wasseraufbereitung, zum Einbringen in einen die ungeklärte Flüssigkeit enthaltenen Behälter, eine Begasungseinrichtung, vorzugsweise eine Belüftungseinrichtung aufweist. Die Filterelemente sind so ausgebildet und angeordnet, dass sie mittig einen Hohlraum bilden, wobei die Begasungseinrichtung im Hohlraum angeordnet ist. Diese ist zur Bildung eines Gas-Flüssigkeitsgemisch mit Druckgas beaufschlagbar, so dass in der Flüssigkeit eine Gas-Flüssigkeitsgemisch-Strömung zwischen den Filterelementen erzeugt wird, die ein Anhaften von Feststoffen an den Filterelementen erschwert.

Dieses Vorgehen ermöglicht eine Reinigung während des Filtervorgangs. Die erfindungsgemässe Vorrichtung ist einfach herstellbar und verbraucht wenig Energie; es ergibt sich auch nicht ein grosser Aufwand für die Regelung. Wenn die Filtervorrichtung drehende Filterelemente aufweist, funktioniert die Reinigung auch bei geringer Umdrehungszahl. Sie kann auch so ausgebildet sein, dass eine Bewegung der Filterelemente relativ zum Behälter gar nicht nötig ist.

Die Begasung - im Folgenden ist zur Vereinfachung der Beschreibung nur noch von "Belüftung" die Rede, wobei aber andere Begasung, bspw. mit Stickstoffgas oder anderem Gas aus einem Druckbehälter mit eingeschlossen ist - erfolgt durch Einbringen von Druckgas in einen porösen oder mit Löchern versehenen Hohlkörper. Der oder die Hohlkörper erstreckt/erstrecken sich über die gesamte Breite des Bereichs, in welchem Filterelemente vorhanden sind. Der/die Hohlkörper kann/können beiderseits an den Enden verschlossen und über hohle Verbindungsteile mit einer Kammer einer Hohlwelle verbunden sein.

Gemäss einer Ausführungsform sind die Filterelemente im Umfang kreis- oder Polygonförmig und bspw. je durch mehrere Filtermodule gebildet. Die Filterelemente sind bspw. um eine horizontale Achse rotierend angebracht. In einem im Innern - bspw. mittig, um die horizontale Achse herum - gebildeten Hohlraum, der über Öffnungen mindestens einseitig mit dem Behälter verbunden ist, ist die Belüftungseinrichtung angebracht..

Durch die aufströmende Druckluft - und auch durch das Absaugen von Filtrat aus den Filtern - wird über die mindestens eine Öffnung des Hohlraums Filterflüssigkeit angesaugt. Das dadurch entstehende Luft- Flüssigkeitsgemisch strömt zwischen den beabstandeten Filterelementen aufwärts. Durch die rotierende Bewegung erfolgt eine sequentielle Abreinigung der Filtermodule. Damit wird ein Anhaften von Feststoffen an den Filterelementen erschwert bzw. vermieden. Durch die sequentielle Reinigung wird der Energieaufwand minimiert, weil durch den Drehvorgang immer nur ein Teil der durch die Filtermodule gebildeten Filterfläche am Strömungsfeld des Luft-Flüssigkeitsgemisches vorbeigeführt wird.

Gemäss einer speziellen Ausführungsform sind noch in der oberen Hälfte der mindestens einen Öffnung des Hohlraums auf der Hohlwelle - bspw. halbkreisförmige - Spoiler befestigt, um die Wirkung der Druckluftstroms auf die Filterflüssigkeit zu erhöhen.

Weitere Ausführungsformen gehen aus den abhängigen Ansprüchen hervor.

Die Erfindung soll nachstehend an einem Ausführungsbeispiel näher erläutert werden. In der zugehörigen Zeichnung zeigen:
- Fig. 1:: eine schematische Darstellung der Filtereinrichtung

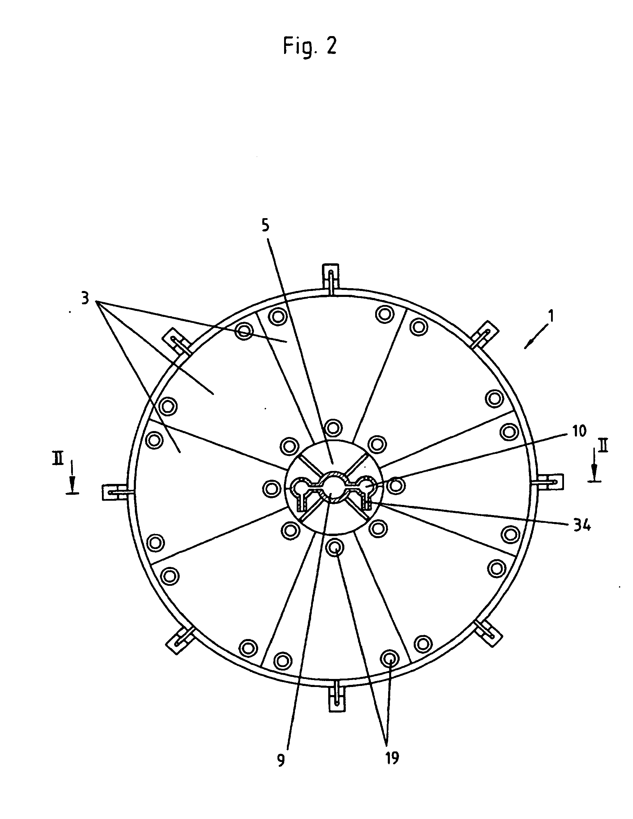

- Fig. 2:: einen Schnitt gemäss der Linie I-I nach Fig. 1

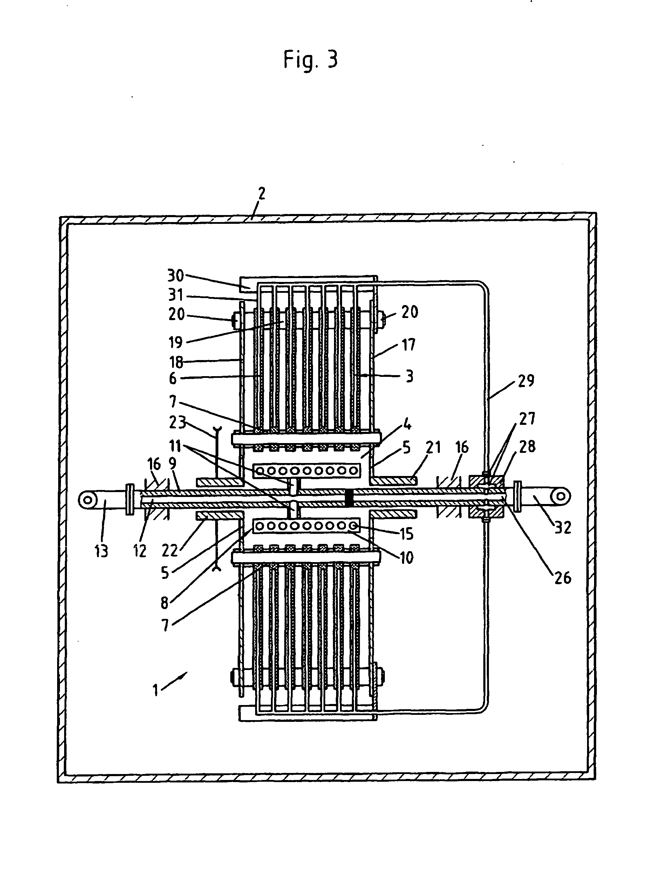

- Fig. 3:: einen Schnitt gemäss der Linie II-II nach Fig. 2
- Fig. 4:: einen Schnitt durch die Belüftüngseimichtüng gemäss Linie III-III nach Fig. 1
- Fig. 5:: die Anordnung eines halbkreisförmigen Spoilers an der Hohlwelle als Einzelheit gemäss Pfeilrichtung A (Fig.1)

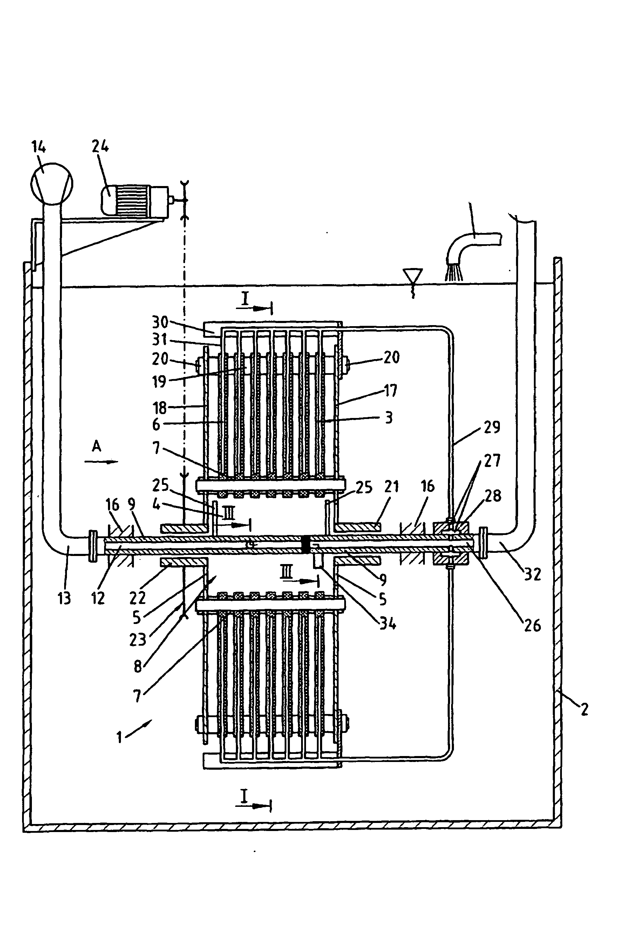

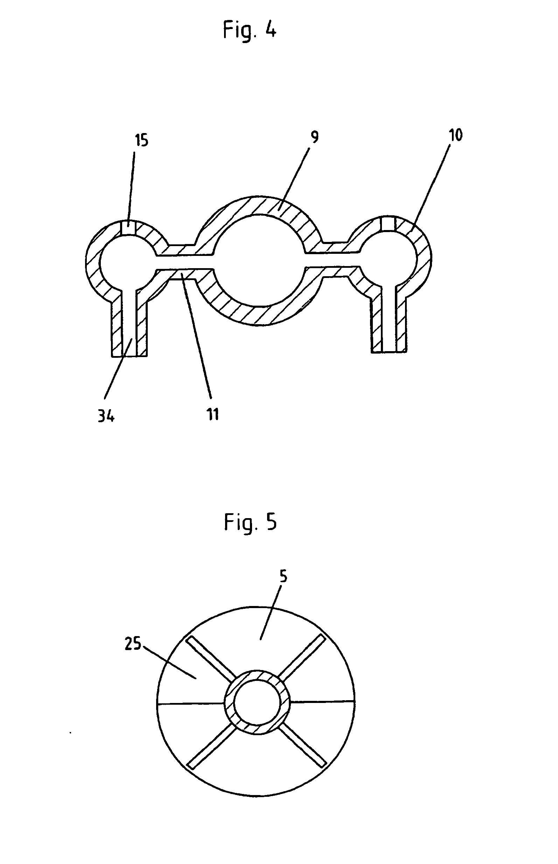

Die Filtereinrichtung 1 ist in einem mit Filterflüssigkeit gefüllten Behälter 2 drehbar untergebracht. Sie besitzt mehrere Filtermodule 3. Die einzelnen Filtermodule 3 setzen sich zu scheibenartigen - im Umfang bspw. kreis- oder polygonförmigen - Filterelementen 6 zusammen. Die einzelnen Filterelemente 6 sind in einen Abstand von bspw. 4 bis 8 mm zusammengefügt. Die zu den Filterelementen 6 zusammengesetzten Filtermodule 3 bestehen bspw. aus mehreren im Wesentlichen parallelen Filterscheiben (nicht dargestellt), wie sie an sich bekannt sind. Über die Filterscheiben, die beidseitig mit Filtern bestückt sind, wird das Filtrat abgeleitet wird. Mittels Distanzscheiben 7 lässt sich der Abstand zwischen den Filterelementen 6 einstellen. Im Hohlraum 4 ist horizontal eine Belüftungseinrichtung 8 stationär angeordnet. Die Belüftungseinrichtung 8 besteht aus parallel zu einer Hohlwelle 9 angeordneten Hohlkörpern 10, die sich über die gesamte Breite der erstrecken, in welcher Filterelemente 6 vorhanden sind, und beiderseits an den Enden verschlossen sind und über hohlförmige Verbindungsteile 11 mit einer Kammer 12 der Hohlwelle 9 verbunden sind, die über eine Rohrleitung 13 mit einem Drucklufterzeuger 14 verbunden ist. Die Hohlkörper 10 können Rohre sein, die zum Austritt der Druckluft entweder aus porösen Material bestehen oder mit Löchern 15 versehen sind. Die mit der Belüftungseinrichtung 8 verbundene Hohlwelle 9 ist in Lagern 16 stationär gelagert. Der Bereich der Filterelemente 6 ist beiderseits durch Lagerscheiben 17, 18 begrenzt, die Filterelemente sind mittels Haltestangen 19 und Muttern 20 an diesen befestigt. Die Lagerscheiben 17, 18 sind in Lagern 21, 22 auf der Hohlwelle 9 drehbar gelagert. Über das Lager 22 ist die Filtereinrichtung 1 mit einem Kettentrieb 23 verbunden, der über einen Motor 24 angetrieben wird (Fig. 1). In der oberen Hälfte des Hohlraums 4 sind die beiden Öffnungen 5 durch Spoiler 25 abgedeckt, die auf der Hohlwelle 9 befestigt sind. Dadurch wird die Strömungswirkung auf die Filterflüssigkeit erhöht (Fig. 1 und 5). Die Hohlwelle 9 weist neben der Kammer 12 eine zweite Kammer 26 auf. Von dieser führen Kanäle 27 radial durch die Hohlwelle 9 über einen Gleitring 28, der mit Rohrleitungen 29 verbunden ist, die an Kanalleisten 30 einmünden und an der Lagerscheibe 17 befestigt sind. Von den Kanalleisten 30 zweigen Leitungen 31 zu den einzelnen Filtermodulen 3 ab. Die zweite Kammer 26 der Hohlwelle 9 ist über eine Rohrleitung 32 mit einer Vakuumpumpe 33 verbunden. Die Hohlkörper 10 sind mit nach unten gerichteten offenen Rohrstutzen 34 versehen, um Filtratablagerungen zu vermeiden. 5.

Die Wirkungsweise ist nun folgende: Während die Filtereinrichtung 1 um die Belüftungseinrichtung 8 rotiert, wird mittels Vakuumpumpe 33 Filtrat aus dem Behälter 2 angesaugt, das über die Filter der Filterelemente 6 eindringt und über Leitungen 31, Kanalleisten 30, Rohrleitungen 29, den radial angeordneten Kanälen 27 von Gleitring 28 und Hohlwelle 9, der zweiten Kammer 26 sowie der Rohrleitung 32 abgeleitet wird. Aus den Hohlkörpern 10 kann das Filtrat über die Rohrstutzen 34 in den Hohlraum 4 entweichen, um eine Ablagerung von Feststoffen aus dem Filtrat zu vermeiden. Über einen Zulauf 35 wird die Filterflüssigkeit im Behälter 2 in etwa konstant gehalten. Gleichzeitig wird durch den Drucklufterzeuger 14 über die Belüftungseinrichtung 8 Druckluft in den Hohlraum 4 eingeblasen. Die eingeblasene Luft strömt nach oben. Es entsteht ein Luft-Flüssigkeitsgemisch, das zwischen den benachbarten Filterelementen und gegebenenfalls innerhalb der Filterelemente zwischen Filterscheiben hindurch strömt und verhindert, dass sich Feststoffe an den Filtern absetzen können. Durch die Drehbewegung der Filterelemente 6 wird eine sequentielle Abreinigung erreicht, wodurch der Energieaufwand infolge der kleinen beströmten Fläche gering ist. Ausserdem kann je nach dem durch die nach oben Strömende Luft bei den Öffnungen 5 ein zusätzlicher Sog entstehen, wodurch Filterflüssigkeit durch die beiden Öffnungen 5 aus dem Behälter 2 angesaugt wird.

Die Erfindung lässt sich auch auf Filtereinrichtungen zum Abtrennen von ungelösten Stoffen aus Flüssigkeiten verwenden, die anders ausgebildete und angeordnete Filterelemente aufweist, als die gerade beschriebenen, aus Modulen mit mehreren Filterscheiben zusammengesetzten Filterelemente.

## Patentansprüche

1. Filtereinrichtung (1) zum Abtrennen von ungelösten Stoffen aus Flüssigkeiten, insbesondere in der Abwasserreinigung und Wasseraufbereitung, mit mehreren Filterelementen (6), zum Einbringen in einen die ungeklärte Flüssigkeit enthaltenen Behälter (2), wobei über die einzelnen Filterelemente (6) ein Filtrat ableitbar ist, die Filterelemente (6) senkrecht angeordnete Filterscheiben aufweisen und die Filterelemente (6) um eine horizontale Achse drehbar angeordnet sind, **dadurch gekennzeichnet, dass** eine Begasungsseinrichtung (8), die zur Bildung eines Gas-Flüssigkeitsgemischs mit Druckgas beaufschlagbar ist, so angeordnet ist, dass in der Flüssigkeit eine Gas-Flüssigkeitsgemisch-Strömung an den Filterelementen (3) erzeugbar ist, die ein Anhaften von Feststoffen an den Filterelementen (6) erschwert, dass die Filterelemente (6) so ausgebildet und angeordnet sind dass sie mittig einen Hohlraum (4) bilden, und dass die Begasungseinrichtung (8) im Hohlraum (4) angeordnet ist, wobei die Begasung durch Einbringen von Druckgas in einen porösen oder mit Löchern versehenen Hohlkörper (10) erfolgt, und der Hohlkörper (10) sich über eine gesamte Breite des Bereiches, in welchem Filterelemente vorhanden sind, erstreckt.

2. Filtereinrichtung nach Anspruch 1, **dadurch gekennzeichnet, dass** der Hohlraum (4) über Öffnungen (5) mit dem Behälter (2) verbunden ist.

3. Filtereinrichtung nach Anspruch 1 oder 2, **dadurch gekennzeichnet, dass** die Belüftungseinrichtung (8) mindestens einen länglichen Hohlkörper (10) aufweist, der mit einer Kammer (12) einer Hohlwelle (9) verbunden ist, wobei die Kammer (12) mit einem Druckgaserzeuger (14) verbunden ist.

4. Filtereinrichtung nach Anspruch 3, **dadurch gekennzeichnet, dass** der längliche Hohlkörper (10) parallel zu der Hohlwelle (9) angeordnet ist und über Verbindungsteile (11) mit der Kammer (12) der Hohlwelle (9) verbunden ist.

5. Filtereinrichtung nach Anspruch 3 oder 4, **dadurch gekennzeichnet, dass** die Filterelemente (6) über Lager (21, 22) drehbar auf der mit der Begasungseinrichtung (8) verbundenen Hohlwelle (9) gelagert sind.

6. Filtereinrichtung nach Anspruch 3 oder 4 oder 5, **dadurch gekennzeichnet, dass** die Hohlwelle (9) eine zweite Kammer (26) aufweist, die mit einer Vakuumpumpe (33) zum Ableiten des Filtrats verbunden ist.

7. Filtereinrichtung nach Anspruch 6, **dadurch gekennzeichnet, dass** die Kammer (26) zum Ableiten des Filtrats mit Kanälen (27) versehen ist, die radial zur Kammer (26) durch die Hohlwelle (9) und einen drehbar auf der Hohlwelle (9) angeordneten Gleitring (28) verlaufen, der mit Rohrleitungen (29) verbunden ist, die an den Filterelementen (3) angeschlossen sind.

8. Filtereinrichtung nach einen der Ansprüche 3 bis 7, **dadurch gekennzeichnet, dass** der Hohlkörper (10) der Begasungseinrichtung (8) zur Vermeidung von Ablagerungen aus der Filterflüssigkeit mit nach unten gerichteten, offenen Rohrstutzen (33) versehen ist.

9. Filtereinrichtung nach einem der Ansprüche 3 bis 8, **dadurch gekennzeichnet, dass** der Hohlraum (4) über Öffnungen (5) mit dem Behälter (2) verbunden ist und dass in der oberen Hälfte der Öffnungen (5) Spoiler (25) befestigt sind, um die Wirkung der Druckluftstroms auf die Filterflüssigkeit zu erhöhen.

10. Filtereinrichtung nach einem der Ansprüche 3 bis 9, **dadurch gekennzeichnet, dass** der mindestens eine Hohlkörper (10) vorzugsweise rohrförmig ausgebildet ist und zum Entweichen des Druckgases entweder aus porösem Material besteht oder mit Löchern (15) versehen ist.

## Claims

1. Filter device (1) for the separation of undissolved solid substances from liquids, in particular in the fields of waste water purification and water treatment, with several filter elements (6), for the introduction into a container (2) containing the unpurified liquid, wherein through the individual filter elements (6) a filtrate is capable of being drained away, the filter elements (6) comprise vertically arranged filter plates and the filter elements (6) are arranged to be rotatable around a horizontal axis, **characterised in that** a gassing installation (8), which is capable of being impinged with compressed gas for the formation of a mixture of gas and liquid is arranged in such a manner, that it is possible to produce a flow in the liquid of the gas and liquid mixture at the filter elements (3) which renders an adhesion of solid substances to the filter elements (6) more difficult, that the filter elements (6) are designed and arranged in such a manner, that they form a hollow space (4) in the centre, and that the gassing installation (8) is arranged in the hollow space (4), wherein the gassing is done by introducing compressed gas into a hollow body (10) which is porous or provided with holes, and the hollow body (10) extends over an entire width of the zone in which filter elements are present.

2. Filter device according to claim 1, **characterised in that** the hollow space (4) is connected with the container (2) through apertures (5).

3. Filter device according claim 1 or 2, **characterised in that** the aeration installation (8) comprises at least one elongated hollow body (10) which is connected with a chamber (12) of a hollow shaft (9), wherein the chamber (12) is connected with a compressed gas generator (14).

4. Filter device according to claim 3, **characterised in that** the elongated hollow body (10) is arranged in parallel to the hollow shaft (9) and is connected with the chamber (12) of the hollow shaft (9) through connecting pieces (11).

5. Filter device according to claim 3 or 4, **characterised in that** the filter elements (6) are rotatably supported by bearings (21, 22) on the hollow shaft (9) connected with the gassing installation (8).

6. Filter device according claim 3 or 4 or 5, **characterised in that** the hollow shaft (9) comprises a second chamber (26), which is connected with a vacuum pump (33) for draining away the filtrate.

7. Filter device according to claim 6, **characterised in that** the chamber (26) for the draining away of the filtrate is provided with channels (27), which extend radially to the chamber (26) through the hollow shaft (9) and through a sliding ring (28) rotatably arranged on the hollow shaft (9), which is connected with piping conduits (29), which are connected with the filter elements (3).

8. Filter device according to one of the claims 3 to 7, **characterised in that** the hollow body (10) of the gassing installation (8) for the purpose of preventing sediments from the filter liquid is provided with open socket pieces (33) directed downwards.

9. Filter device according to one of claims 3 to 8, **characterised in that** the hollow space (4) is connected with the container (2) through apertures (5) and **in that** in the upper zone of the apertures (5) spoilers (25) are attached, in order to increase the effect of the flow of compressed air on the filter liquid.

10. Filter device according to one of the claims 3 to 9, **characterised in that** the at least one hollow body (10) in preference is designed as pipe-shaped and in order to allow the compressed gas to escape consists either of a porous material or else is provided with holes (15).

## Revendications

1. Dispositif de filtration (1) pour séparer des substances non dissoutes présentes dans des liquides, en particulier en épuration d'eau usee et en traitement d'eau, qui présente plusieurs éléments de filtration (6) destinés à être placés dans un recipient (2) qui contient le liquide non épuré, un filtrat pouvant être obtenu à l'aide des éléments individuels de filtration (6), les éléments de filtration (6) comportant des disques de filtration et les éléments de filtration (6) étant disposés de manière à pouvoir tourner autour d'un axe horizontal **caractérisé en ce que** un dispositif d'injection de gaz (8) qui est apte à être alimenté en gaz sous pression pour former un mélange de gaz et de liquide est disposé de manière à pouvoir créer dans le liquide un écoulement mixte de gaz et de liquide sur les éléments de filtration (3), de telle sorte que cet écoulement rend plus difficile l'adhérence de solides sur les éléments de filtration (6), que les éléments de filtration (6) sont configurés et disposes de manière à former en leur centre un espace creux (4), et que le dispositif (8) d'injection de gaz est disposé dans l'espace creux (4), dans lequel l'injection de gaz est effectué par l'introduction de gaz comprimé en un corps creux (10) qui est poreux ou muni de trous, et le corps creux (10) s'étend sur une largeur entière d'une zone dans laquelle les éléments de filtration sont présents.

2. Dispositif de filtration selon la revendication 1, **caractérisé en ce que** l'espace creux (4) est relié au recipient (2) par des ouvertures (5).

3. Dispositif de filtration selon la revendication 1 ou 2, **caractérisé en ce que** le dispositif (8) d'injection de gaz présente au moins un corps creux (10) allongé disposé parallèlement à un arbre creux (9), qui est relié à une chambre (12) d'un arbre creux (9), la chambre (12) étant reliée à un générateur (14) de gaz sous pression.

4. Dispositif de filtration selon la revendication 3, **caractérisé en ce que** le corps creux (10) allongé est disposé parallèlement à l'arbre creux (9), et est relié à la chambre (12) de l'arbre creux (9) par des pièces de raccordement (11).

5. Dispositif de filtration selon la revendication 3 ou 4, **caractérisé en ce que** les éléments de filtration (6) sont montés par l'intermédiaire de paliers de rotation (21, 22) sur l'arbre creux (9) raccordé au dispositif (8) d'injection de gaz.

6. Dispositif de filtration selon la revendication 3 ou 4 ou 5, **caractérisé en ce que** l'arbre creux (9) présente une deuxième chambre (26) qui est reliée à une pompe à vide (33) pour evacuer le filtrat.

7. Dispositif de filtration selon la revendication 6, **caractérisé en ce que** pour l'évacuation du filtrat, la chambre (26) est dotée de canaux (27) qui traversent l'arbre creux (9) radialement par rapport à la chambre (26) et d'une bague coulissante (28) disposée à rotation sur l'arbre creux (9) et reliée à des conduits tubulaires (29) qui sont raccordés aux éléments de filtration (3).

8. Dispositif de filtration selon l'une des revendications 3 à 7, **caractérisé en ce que** le ou les corps creux (10) du dispositif (8) d'injection de gaz sont dotés de tubulures ouvertes (33) orientées vers le bas pour éviter des dépôts provenant du liquide de filtration.

9. Dispositif de filtration selon l'une des revendications 3 à 8, **caractérisé en ce que** l'espace creux (4) est relié au recipient (2) par des ouvertures (5) et **en ce que** des chicanes (25) de forme semi-circulaire sont fixées dans la partie supérieure des ouvertures (5) pour augmenter l'effet de l'écoulement d'air sous pression sur le liquide de filtration.

10. Dispositif de filtration selon l'une des revendications 3 à 9, **caractérisé en ce que** pour permettre l'échappement du gaz sous pression, le ou les corps creux (10) ont de préférence une forme tubulaire et sont réalisés en un matériau poreux ou sont dotés de trous (15).
